# EUROPÄISCHE PATENTANMELDUNG

(11) **EP 2 626 269 A2**
(43) Veröffentlichungstag der Anmeldung: **14.08.2013**
(21) Anmeldenummer: 13151766.6
(22) Anmeldetag: 18.01.2013
(51) Int. Cl.: B60W 30/14, B60W 30/18

(54) **Verfahren und Fahrerassistenzsystem zur automatischen Steuerung der Geschwindigkeit eines Fahrzeuges**

(30) Priorität: 11.02.2012 DE 102012002761
(71) Anmelder: Volkswagen Aktiengesellschaft, 38440 Wolfsburg (DE)
(72) Erfinder: Auer, Dr. Richard, 38442 Wolfsburg (DE); Weiß, Norbert, 38173 Sickte (DE); Kaczor, Benjamin, 38550 Isenbüttel (DE); Busse, Oliver, 38442 Wolfsburg (DE)

(57) **Zusammenfassung**

Die Erfindung betrifft ein Verfahren zur automatischen Steuerung der Geschwindigkeit eines Fahrzeuges, wobei eine Auslösung der automatischen Steuerung in Abhängigkeit der Betätigung eines Fahrpedals des Fahrzeuges erfolgt.

Es ist vorgesehen, dass beim Loslassen des Fahrpedals durch ein Fahrerassistenzsystem (10) eine Begrenzung auf eine Fahrgeschwindigkeit eingestellt wird, die gleich oder einen vorgegebenen Betrag größer als eine gemessene Fahrgeschwindigkeit zum Zeitpunkt des Loslassens des Fahrpedals ist.

Die Erfindung betrifft ferner ein Fahrerassistenzsystem (10) für ein Fahrzeug zur automatischen Steuerung der Geschwindigkeit des Fahrzeuges.

## Beschreibung

Die Erfindung betrifft ein Verfahren zur automatischen Steuerung der Geschwindigkeit eines Fahrzeuges, wobei eine Auslösung der automatischen Steuerung in Abhängigkeit der Betätigung eines Fahrpedals des Fahrzeuges erfolgt, und ein Fahrerassistenzsystem für ein Fahrzeug zur automatischen Steuerung der Geschwindigkeit des Fahrzeuges.

Fahrerassistenzsysteme zur automatischen Steuerung der Geschwindigkeit eines Fahrzeuges sind bekannt. Diese als Geschwindigkeitsregelanlage oder auch Tempomat bezeichneten Systeme gestatten einem Fahrzeugführer, über Betätigungsmittel eine wählbare Fahrgeschwindigkeit vorzugeben, die dann vom Fahrzeug unabhängig von der Betätigung eines Fahrpedals beibehalten wird.

Die Fahrgeschwindigkeit wird vom Fahrzeugführer vorgegeben und wird auch unabhängig von Fahrsituationen, beispielsweise Bergauffahrt oder auch Bergabfahrt, beibehalten.

Aus DE 10 2006 05 179 A1 ist ein Verfahren zur automatischen Abwärtsgeschwindigkeitssteuerung bekannt, das geeignet ist, neigungsindizierte Energie automatisch zu absorbieren, so dass der Fahrzeugbediener nicht länger aktiv werden muss, um eine im Wesentlichen konstante Fahrgeschwindigkeit beizubehalten. Die Abwärtsgeschwindigkeitssteuerung wird vorzugsweise ausgelöst, wenn das Gaspedal losgelassen wird, und das Fahrzeug beschleunigt. Als konstante Fahrgeschwindigkeit wird eine vom Fahrzeugführer vorgegebene Fahrzeugzielgeschwindigkeit angesteuert.

Der Erfindung liegt die Aufgabe zugrunde, ein Verfahren und ein Fahrerassistenzsystem der gattungsgemäßen Art zu schaffen, mittels denen in einfacher Weise eine automatische Steuerung der Geschwindigkeit eines Fahrzeuges erfolgen kann und die sich durch einen hohen Komfort auszeichnen.

Erfindungsgemäß wird diese Aufgabe durch ein Verfahren mit den in Anspruch 1 genannten Merkmalen gelöst. Dadurch, dass eine Auslösung der automatischen Steuerung der Geschwindigkeit des Fahrzeuges in Abhängigkeit der Betätigung eines Fahrpedals des Fahrzeuges erfolgt, wobei beim Loslassen des Fahrpedals durch ein Fahrerassistenzsystem eine Begrenzung auf eine Fahrgeschwindigkeit eingestellt wird, die gleich oder einen vorgegebenen Betrag größer als die gemessene Fahrgeschwindigkeit zum Zeitpunkt des Loslassens des Fahrpedals ist, ist vorteilhaft möglich, die Geschwindigkeit des Fahrzeuges automatisch auf eine Geschwindigkeit zu steuern, die abhängig ist von der aktuellen Geschwindigkeit des Fahrzeuges, ohne dass von einem Fahrzeugführer beispielsweise über Eingabemittel zuvor eine gewünschte Geschwindigkeit eingegeben werden muss. Somit kann durch den Fahrzeugführer durch Betätigung des Fahrpedals die einzustellende gewünschte, automatisch zu erhaltene Geschwindigkeit eingestellt werden.

In bevorzugter Ausgestaltung der Erfindung ist vorgesehen, dass die automatische Steuerung der Fahrgeschwindigkeit bei einer Bergabfahrt des Fahrzeuges erfolgt. Hierdurch wird vorteilhaft möglich, bei erkennbarer Bergabfahrt, beispielsweise bei Einfahrt in eine Tiefgarage oder ein Parkhaus mit starkem Gefälle oder bei Bergabfahrten im Gebirge oder auf Landstraßen beziehungsweise Autobahnen, durch einfaches Loslassen des Fahrpedals die gewünschte maximale Geschwindigkeit einzustellen. Dadurch, dass diese Geschwindigkeit gleich oder nahe der Geschwindigkeit beim Loslassen des Fahrpedals ist, kann das Fahrzeug nicht selbsttätig auf eine höhere Geschwindigkeit durch das Gefälle der Fahrstrecke beschleunigen.

In weiterer bevorzugter Ausgestaltung der Erfindung ist vorgesehen, dass bei geringer werdender Fahrgeschwindigkeit die Begrenzung der Fahrgeschwindigkeit auf die aktuelle Fahrgeschwindigkeit angepasst wird. Hierdurch wird vorteilhaft erreicht, dass für den Fall, dass das Fahrzeug bei losgelassenem Fahrpedal auf die zu diesem Zeitpunkt gemessene Fahrgeschwindigkeit begrenzt ist und bei sich selbsttätig weiter verringernder Fahrgeschwindigkeit die Begrenzung der Fahrgeschwindigkeit mitgeführt wird, so dass ein plötzliches Beschleunigen, beispielsweise bei auftretendem stärker werdenden Gefälle der Fahrstrecke, keine für den Fahrzeugführer überraschende Beschleunigung auf eine wesentlich höhere Fahrgeschwindigkeit erfolgt.

Darüber hinaus ist bevorzugt vorgesehen, dass die Begrenzung der Fahrgeschwindigkeit auf die aktuelle Fahrgeschwindigkeit nur oder zusätzlich bei Betätigung eines Bremspedals eines Fahrzeuges angepasst wird. Hierdurch wird vorteilhaft möglich, dass der Fahrzeugführer durch wahlweise Betätigung des Fahrpedals beziehungsweise des Bremspedals selber die Geschwindigkeit, mit der das Fahrzeug maximal fahren soll, durch Pedalbetätigung einstellen kann. Eine Änderung der nicht zu überschreitenden Maximalgeschwindigkeit kann somit entweder passiv durch Loslassen des Fahrpedals oder aktiv durch Betätigen des Bremspedals durch den Fahrer beeinflusst werden.

In weiterer bevorzugter Ausgestaltung der Erfindung ist vorgesehen, dass die automatische Steuerung der Fahrgeschwindigkeit bei Bergabfahrt durch Loslassen des Fahrpedals mit einer automatischen Begrenzung der Fahrgeschwindigkeit durch Vorgabe des Fahrzeugführers über Betätigungsmittel verknüpft wird. Somit ist vorteilhaft möglich, die durch an sich bekannte Geschwindigkeitsregelanlagen vorgesehene automatische Steuerung der Geschwindigkeit mit einer automatischen Steuerung der Geschwindigkeit bei Bergabfahrt auf die zum Zeitpunkt eines Loslassens des Fahrpedals gemessene Fahrgeschwindigkeit zu kombinieren. Hierdurch ergibt sich eine zusätzliche Komfortfunktion für den Fahrzeugführer, da nicht zu befürchten ist, dass bei einer Bergabfahrt eine zuvor mit einem Betätigungsmittel eingestellte Geschwindigkeit erreicht wird, die vom Fahrzeugführer als zu schnell empfunden wird. Eine Betätigung des Bremspedals ist hierfür - wie bei den bekannten Geschwindigkeitsregelanlagen - nicht erforderlich.

Die Aufgabe wird ferner durch ein Fahrerassistenzsystem mit den in Anspruch 6 genannten Merkmalen gelöst. Dadurch, dass das Fahrerassistenzsystem ein Steuergerät umfasst, welches über Steuerleitungen mit wenigstens einer eine Fahrgeschwindigkeit des Fahrzeuges verzögernden Einrichtung des Fahrzeuges verbunden ist, das Steuergerät über Signalleitungen mit einem Geschwindigkeitssensor des Fahrzeuges verbunden ist sowie das Steuergerät über Signalleitungen mit einem die Stellung eines Fahrpedals des Fahrzeuges detektierenden Sensor verbunden ist, wobei das Steuergerät einen Prozessor umfasst, der bei erkanntem Loslassen des Fahrpedals einen Geschwindigkeitsgeber des Fahrzeuges derart ansteuert, dass eine maximale Fahrgeschwindigkeit, die der gemessenen Fahrgeschwindigkeit entspricht oder in einem vorgebbaren Betrag darüber liegt, nicht überschritten wird, ist vorteilhaft möglich, das Fahrzeug mit einer zusätzlichen Komfortfunktion zu versehen. Insbesondere ist hiermit in einfacher Weise eine Begrenzung der Fahrgeschwindigkeit des Fahrzeuges bei starkem Gefälle möglich.

In weiterer bevorzugter Ausgestaltung der Erfindung ist vorgesehen, dass das Steuergerät über eine Signalleitung mit einem Neigungssensor verbunden ist, der eine Fahrzeugneigung in Fahrtrichtung detektiert. Hierdurch wird vorteilhaft möglich, die zusätzliche Komfortfunktion automatisch bei einer Bergabfahrt zuzuschalten.

Darüber hinaus ist in bevorzugter Ausgestaltung der Erfindung vorgesehen, dass das Fahrerassistenzsystem durch ein Schaltelement zuschaltbar beziehungsweise abschaltbar ist. Dieses Schaltelement kann vorzugsweise ein Betätigungsmittel in einem Armaturenbrett oder einer Konsole eines Fahrzeuges sein. Bevorzugt kann dieses Schaltelement auch eine im Steuergerät implementierte Funktion sein, die erkennt, ob das Fahrpedal betätigt ist oder ob das Fahrpedal nicht betätigt ist. Bei Betätigung des Fahrpedals würde die zusätzliche Komfortfunktion deaktiviert und für den Fall, dass das Fahrpedal nicht betätigt ist, würde die zusätzliche Komfortfunktion aktiviert.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: ein Blockschaltbild des erfindungsgemäßen Fahrerassistenzsystems;
- Figur 2: einen Kennlinienverlauf zur automatischen Steuerung der Geschwindigkeit in einem ersten Ausführungsbeispiel und
- Figur 3: einen Kennlinienverlauf der automatischen Steuerung der Geschwindigkeit in einem zweiten Ausführungsbeispiel.

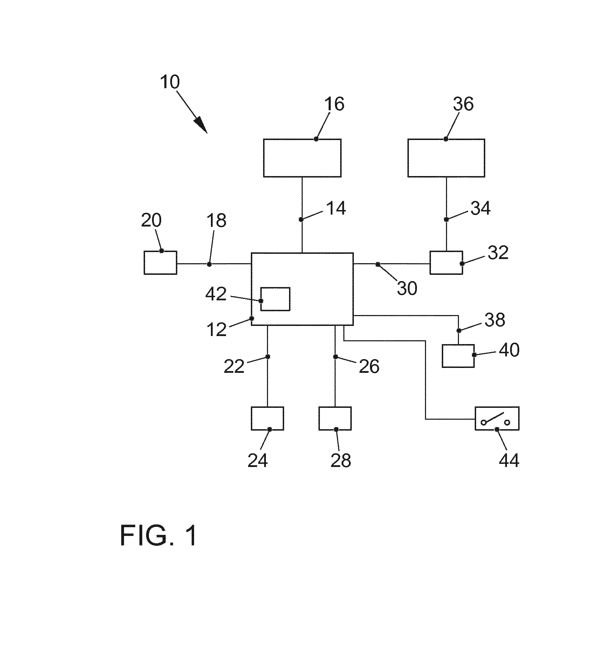

Figur 1 zeigt ein Blockschaltbild eines insgesamt mit 10 bezeichneten Fahrerassistenzsystems eines im Einzelnen nicht dargestellten Fahrzeuges. Das Fahrerassistenzsystem 10 umfasst ein Steuergerät 12. Das Steuergerät 12 kann ein eigenständiges Steuergerät für das Fahrerassistenzsystem 10 sein, kann jedoch auch in ein übergeordnetes Steuergerät für weitere, hier nicht näher zu betrachtende Funktionen des Fahrzeuges integriert sein.

Das Steuergerät 12 ist über eine Steuerleitung 14 mit mindestens einer, eine Fahrgeschwindigkeit eines Fahrzeuges verzögernde Einrichtung 16 verbunden. Die Einrichtung 16 kann beispielsweise eine Radbremsanlage, ein Getriebe, eine Motorbremse, ein Elektromotor eines Elektro- oder Hybridantriebes oder auch eine andere geeignete Einrichtung sein. Selbstverständlich kann das Steuergerät 12 auch über mehrere Steuerleitungen mit mehreren Einrichtungen 16 verbunden sein.

Das Steuergerät 12 ist ferner über eine Signalleitung 18 mit einem Sensor 20 zur Ermittlung einer Fahrgeschwindigkeit des Fahrzeuges verbunden. Darüber hinaus ist das Steuergerät 12 über eine Signalleitung 22 mit einem die Stellung eines Fahrpedals des Fahrzeuges detektierenden Sensor 24 und eine Signalleitung 26 mit einem die Stellung eines Bremspedals des Fahrzeuges detektierenden Sensor 28 verbunden. Darüber hinaus ist das Steuergerät 12 über eine Steuerleitung 30 mit einem Geschwindigkeitsgeber 32 verbunden. Der Geschwindigkeitsgeber 32 ist über eine weitere Steuerleitung 34 mit wenigstens einer Antriebseinrichtung 36 des Fahrzeuges verbunden.

Schließlich ist das Steuergerät 12 optional über eine Signalleitung 38 mit einem Neigungssensor 40 verbunden, der eine Neigung des Fahrzeuges um die Fahrzeugquerachse in Fahrtrichtung detektiert.

In Figur 1 ist noch ein Schaltelement 44 angedeutet, über das das Fahrerassistenzsystem 10 zugeschaltet oder abgeschaltet werden kann. Das Schaltelement 44 ist beispielsweise in einem Armaturenbrett des Fahrzeuges angeordnet.

Das Steuergerät 12 umfasst einen Prozessor 42 sowie weitere im Detail nicht dargestellte Regler, Speicherelemente und dergleichen.

Das in Figur 1 dargestellte Fahrerassistenzsystem 10 zeigt folgende Funktion:

Während einer Fahrt des nicht dargestellten Fahrzeuges erhält das Steuergerät 12 ständig Informationen über den Sensor 20 über die momentane Fahrgeschwindigkeit des Fahrzeuges. Ferner erhält das Steuergerät 12 über den Sensor 24 Informationen über die Stellung des Fahrpedals. Wird nunmehr über den Sensor 24 detektiert, dass das Fahrpedal von einem Fahrzeugführer losgelassen wird, wird die vom Sensor 20 gelieferte momentane Geschwindigkeit gespeichert und über den Prozessor 42 ein Steueralgorithmus in Gang gesetzt, der sicherstellt, dass das Fahrzeug nicht oder nur einen geringfügigen Betrag über der momentanen Geschwindigkeit beschleunigt wird. Bei losgelassenem Fahrpedal kann diese Situation üblicherweise nur bei einer Bergabfahrt auftreten, wenn eine neigungsinduzierte Energie auf das Fahrzeug wirkt. Über die Steuerleitung 14 wird die wenigstens eine, eine Fahrgeschwindigkeit des Fahrzeuges verzögernde Einrichtung 16 derart angesteuert, dass die momentane Geschwindigkeit beim Loslassen des Fahrpedals nicht überschritten wird oder gegebenenfalls nur um einen vorgebbaren minimalen Betrag überschritten wird. Dieser minimale Betrag kann beispielsweise ein Prozentsatz der momentanen Geschwindigkeit, beispielsweise 5 %, oder ein absoluter Betrag, beispielsweise 5 km/h, betragen. Somit ist sichergestellt, dass die Geschwindigkeit des Fahrzeuges automatisch begrenzt wird und dieses nicht von alleine auf eine höhere Geschwindigkeit, als die Geschwindigkeit, die beim Loslassen des Fahrpedals anlag, beschleunigen kann. Hierdurch ergibt sich ein höherer Komfort, da das Fahrzeug nun nicht mehr selbsttätig und vielleicht auch gegen den Willen des Fahrzeugführers bei einem Loslassen des Fahrpedals beschleunigen kann.

Insbesondere bei einer Bergabfahrt kann der Fahrzeugführer so seine Aufmerksamkeit auf andere anstehende Aufgaben lenken.

Durch Betätigen des Bremspedals kann der Fahrzeugführer zusätzlich in die Begrenzung der Geschwindigkeit eingreifen. Erkennt der Sensor 28, dass das Bremspedal betätigt ist, führt das Steuergerät 12 die über den Sensor gemessene momentane Geschwindigkeit mit und begrenzt die Fahrgeschwindigkeit des Fahrzeuges auf die Geschwindigkeit, die dann nach Loslassen des Bremspedals durch den Fahrzeugführer erreicht ist. Somit kann der Fahrzeugführer jederzeit aktiv in eine weitere Absenkung der Fahrgeschwindigkeit eingreifen. Wünscht der Fahrzeugführer während dieser Phase eine Beschleunigung des Fahrzeuges, kann er dies jederzeit durch Betätigen des Fahrpedals erreichen. Das Steuergerät 12 wird dann über den Geschwindigkeitsgeber 32 die wenigstens eine Antriebseinheit 36 des Fahrzeuges entsprechend ansteuern. Bei einem erneuten Loslassen des Fahrpedals wird dies wiederum über den Sensor 24 erkannt und die vom Sensor 20 gemessene momentane Geschwindigkeit wird dann als erneute Limiter-Geschwindigkeit gesetzt.

Optional kann das Steuergerät 12 zusätzlich mit dem Neigungssensor 40 verbunden sein. Hierdurch erhält das Steuergerät 12 eine Information, dass das Fahrzeug sich tatsächlich in einer Bergabfahrt befindet. Durch diese zusätzliche Information ist das Steuergerät 12 in der Lage, die automatische Begrenzung der Geschwindigkeit nur dann zuzuschalten, wenn das Fahrzeug sich tatsächlich in einer Bergabfahrt befindet. Auf gerader Strecke würde dann die Limiter-Funktion bei Loslassen des Fahrpedals durch den Fahrzeugführer nicht aktiviert werden.

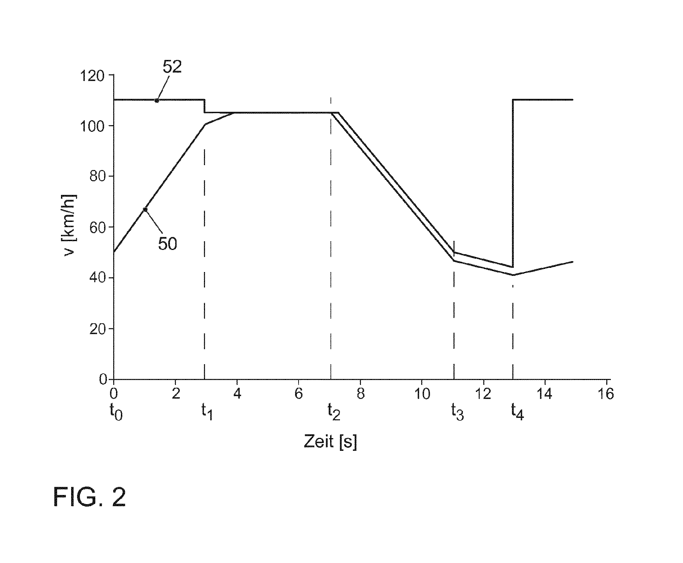

Figur 2 zeigt anhand eines Kennlinienverlaufes ein mögliches Ausführungsbeispiel zur automatischen Steuerung der Geschwindigkeit eines Fahrzeuges. In der Figur 2 sind zwei Kennlinien der Fahrgeschwindigkeit v jeweils über der Zeit t aufgetragen. Eine erste Kennlinie 50 (untere Kennlinie) entspricht der über den Sensor 20 gemessenen Fahrgeschwindigkeit des Fahrzeuges. Eine zweite Kennlinie 52 (obere Kennlinie) entspricht der von dem Fahrerassistenzsystem 10 gesetzten Limiter-Geschwindigkeit.

Es wird deutlich, dass zunächst in einem Zeitabschnitt zwischen dem Zeitpunkt t₀ und dem Zeitpunkt t₁ das Fahrzeug beschleunigt. Dies bedeutet, in dieser Zeitspanne wird das Fahrpedal betätigt. Eine Bergabfahrt-Limiter-Geschwindigkeit ist nicht gesetzt. Jedoch kann das Fahrzeug über eine allgemeine, unabhängig von der hier beschriebenen Erfindung gesetzten Limiter-Geschwindigkeit begrenzt sein. Sie liegt beispielsweise wie im gezeigten Beispiel bei 110 km/h. Zum Zeitpunkt t₁ wird das Fahrpedal losgelassen. Das Steuergerät 12 detektiert dies über den Sensor 24. Gleichzeitig wird die aktuelle Geschwindigkeit über den Sensor 20 erfasst. Diese beträgt gemäß dem Beispiel beispielsweise 100 km/h. Die Limiter-Geschwindigkeit wird dann auf einen geringfügigen Betrag oberhalb dieser Geschwindigkeit, beispielsweise auf 105 km/h, gesetzt. In einer Zeitspanne zwischen den Zeitpunkten t₁ und t₂ rollt das Fahrzeug eine Gefällestrecke bergab. Durch neigungsinduzierte Energie würde das Fahrzeug automatisch weiter beschleunigen, ohne dass das Fahrpedal betätigt ist. Durch die gesetzte Limiter-Geschwindigkeit bei beispielsweise 105 km/h wird die Geschwindigkeit des Fahrzeuges auf die Limiter-Geschwindigkeit begrenzt. Das Steuergerät 12 steuert hierzu die wenigstens eine, die Fahrgeschwindigkeit des Fahrzeuges verzögernde Einrichtung 16 entsprechend an. Zum Zeitpunkt t₂ wird vom Fahrzeugführer zusätzlich das Bremspedal betätigt. Das Fahrzeug verzögert entsprechend und verringert seine Geschwindigkeit bis zum Zeitpunkt t₃, zu dem das Bremspedal losgelassen wird. Über das Steuergerät 12 wird die jeweils momentane Geschwindigkeit des Fahrzeuges zu den einzelnen Zeitpunkten innerhalb der Zeitspanne zwischen den Zeitpunkten t₂ und t₃ über den Sensor 20 ermittelt. Gleichzeitig wird durch den Prozessor 42 eine Limiter-Geschwindigkeit gesetzt, die jeweils um einen definierten Betrag, beispielsweise von 5 km/h, größer ist als die tatsächliche Fahrgeschwindigkeit. Die Limiter-Geschwindigkeit wird somit bei einer Verzögerung des Fahrzeuges mitgeführt.

In der Zeitspanne zwischen den Zeitpunkten t₃ und t₄ wird weder das Fahrpedal noch das Bremspedal betätigt. Es wird angenommen, dass nach einer Talfahrt das Fahrzeug jetzt beispielsweise wieder bergauf rollt. Die Geschwindigkeit des Fahrzeuges nimmt daher weiter ab. Die Limiter-Geschwindigkeit wird weiterhin in einem Abstand entsprechend der gemessenen Fahrgeschwindigkeit mitgeführt. Zum Zeitpunkt t₄ wird durch den Fahrzeugführer das Fahrpedal wieder betätigt, so dass das Fahrzeug beschleunigt. Gleichzeitig wird die Bergabfahrt-Limiter-Geschwindigkeit zurückgesetzt und für das Fahrzeug die zuvor eingestellte allgemeine Limiter-Geschwindigkeit, beispielsweise mit einem Wert von 110 km/h, wieder gesetzt.

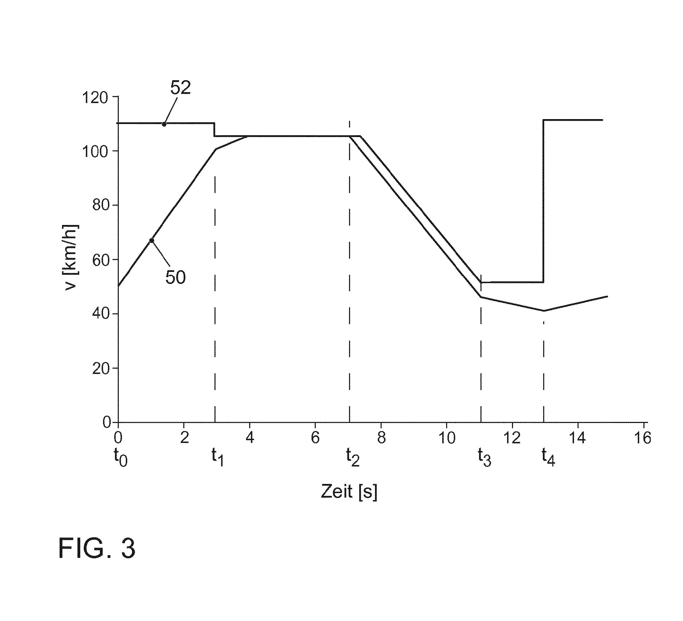

Figur 3 zeigt einen abgewandelten Kennlinienverlauf für ein anderes Ausführungsbeispiel. Im Unterschied zu dem in Figur 2 gezeigten Ausführungsbeispiel wird hier in der Zeitspanne zwischen den Zeitpunkten t₃ und t₄, also in der Zeitspanne, in der nach einer Bremspedalbetätigung bei einer Talfahrt das Fahrzeug ohne Betätigung des Fahrpedals oder des Bremspedals bergauf rollt, die Limiter-Geschwindigkeit nicht mitgeführt, sondern diese verharrt auf dem Wert, der auf Basis der zuletzt gemessenen Fahrgeschwindigkeit während der Betätigung des Bremspedals ermittelt wurde. In dem Bereich zwischen den Zeitpunkten t₃ und t₄ ist somit das Begrenzen der Fahrgeschwindigkeit ausgeschaltet.

Die in Figur 2 gezeigte Variante bietet den Vorteil, dass dort durch aktives Betätigen des Fahrpedals oder des Bremspedals auf die Limiter-Geschwindigkeit Einfluss genommen werden kann. Insbesondere bei einer Bergabfahrt mit Begrenzung der Fahrgeschwindigkeit und einer kurzen Steigung, die ohne Betätigung des Fahrpedals überwunden werden kann, und einer nachfolgenden weiteren Bergabfahrt kann gemäß dem in Figur 2 gezeigten Ausführungsbeispiel die Limiter-Geschwindigkeit weiter nachgeführt werden, während die in Figur 3 gezeigte Ausführungsvariante bei der Limiter-Geschwindigkeit verharrt, die zum Zeitpunkt des Loslassens des Bremspedals sich ergibt.

Nach einem weiteren, nicht dargestellten Ausführungsbeispiel ist es möglich, dass ein Limiter sich von selbst zuschaltet, wenn ein Gefälle erkannt wird. Es ist beispielsweise denkbar, dass Geschwindigkeitsregelanlage und Limiter über einen Hauptschalter aktivierbar sind, so dass die beschriebene Funktion immer dann aktiv ist, wenn der Hauptschalter an ist, ohne dass die Geschwindigkeitsregelanlage oder der Limiter direkt eine gesetzte Geschwindigkeit haben.

Des Weiteren wäre es vorstellbar, dass diese Funktion nur in bestimmten Fahrsituationen automatisch zuschaltet, beispielsweise nur bei hohen Geschwindigkeiten (damit es nur auf einer Autobahn aktiv ist) oder nur bei niedrigen Geschwindigkeiten (damit es nur in Stadtsituationen aktiv ist, wie beispielsweise im Parkhaus), oder dass der Kunde sich seinen Geschwindigkeitsbereich auswählen kann.

Die Einrichtung 16 kann beispielsweise der Elektroantrieb des Hybridfahrzeuges sein. Es ist dahingehend besonders interessant, im Elektrofahrzeug die Energie während der erfindungsgemäßen Begrenzung der Fahrzeuggeschwindigkeit einzusammeln.

Bei hybrid betriebenen Fahrzeugen gibt es in Kombination über den bekannten Antrieb hinaus den Betriebsmodus Rekuperieren.

Das Rekuperieren bezeichnet die Rückgewinnung von Energie. Diese wird im Hybrid durch das gezielte Abbremsen über den E-Antrieb erreicht. Der im normalen Verbrennungsmotor durch das Bremsen erreichte negative Beschleunigungsmoment zum Verlangsamen des Fahrzeuges übernimmt im Hybrid zum Teil die E-Maschine, die als Last zugeschaltet wird (invers zum Boosten) und ähnlich einer Motorbremse funktioniert, die gleichzeitig den Energiespeicher auflädt. Dadurch wird der eigentliche Bremseingriff reduziert, was als weiterer Vorteil die Abnutzung der Bremsbelege und -scheiben reduziert.

### Bezugszeichenliste

- 10: Fahrerassistenzsystem
- 12: Steuergerät
- 14: Steuerleitung
- 16: verzögernde Einrichtung
- 18: Signalleitung
- 20: Sensor zur Ermittlung einer Fahrgeschwindigkeit
- 22: Signalleitung
- 24: Sensor zur Detektierung der Stellung eines Fahrpedals des Fahrzeuges
- 26: Signalleitung
- 28: Sensor zur Detektierung der Stellung eines Bremspedals des Fahrzeuges
- 30: Steuerleitung
- 32: Geschwindigkeitsgeber
- 34: Steuerleitung
- 36: Antriebseinrichtung
- 38: Signalleitung
- 40: Neigungssensor
- 42: Prozessor
- 44: Schaltelement

- 50: Kennlinie
- 52: Kennlinie

- v: Fahrgeschwindigkeit
- t: Zeit
- tₙ: Zeitpunkte

## Patentansprüche

1. Verfahren zur automatischen Steuerung der Geschwindigkeit eines Fahrzeuges, wobei eine Auslösung der automatischen Steuerung in Abhängigkeit der Betätigung eines Fahrpedals des Fahrzeuges erfolgt, **dadurch gekennzeichnet, dass** beim Loslassen des Fahrpedals durch ein Fahrerassistenzsystem (10) eine Begrenzung auf eine Fahrgeschwindigkeit eingestellt wird, die gleich oder einen vorgegebenen Betrag größer als eine gemessene Fahrgeschwindigkeit zum Zeitpunkt des Loslassens des Fahrpedals ist.

2. Verfahren nach Anspruch **1, dadurch gekennzeichnet, dass** die automatische Steuerung der Fahrgeschwindigkeit bei einer Bergabfahrt des Fahrzeuges erfolgt.

3. Verfahren nach einem der vorhergehenden Ansprüche, **dadurch gekennzeichnet, dass** bei geringer werdender Fahrgeschwindigkeit die Begrenzung der Fahrgeschwindigkeit auf die aktuelle Fahrgeschwindigkeit angepasst wird.

4. Verfahren nach Anspruch 3, **dadurch gekennzeichnet, dass** die Begrenzung der Fahrgeschwindigkeit auf die aktuelle Fahrgeschwindigkeit bei Betätigung eines Bremspedals eines Fahrzeuges angepasst wird.

5. Verfahren nach einem der vorhergehenden Ansprüche, **dadurch gekennzeichnet, dass** die automatische Steuerung der Fahrgeschwindigkeit bei Bergabfahrt durch Loslassen des Fahrpedals mit einer automatischen Begrenzung der Fahrgeschwindigkeit durch Vorgabe des Fahrzeugführers über Betätigungsmittel verknüpft wird.

6. Fahrerassistenzsystem (10) für ein Fahrzeug zur automatischen Steuerung der Geschwindigkeit des Fahrzeuges, das ein Steuergerät (12) umfasst, welches über wenigstens eine Steuerleitung (14) mit wenigstens einer eine Fahrgeschwindigkeit des Fahrzeuges verzögernde Einrichtung (16) des Fahrzeuges verbunden ist, und das über eine Signalleitung (18) mit einem Geschwindigkeitssensor (20) des Fahrzeuges verbunden ist, und das über eine Signalleitung (22) mit einem die Stellung eines Fahrpedals des Fahrzeuges detektierenden Sensor (24) verbunden ist, **dadurch gekennzeichnet, dass** das Steuergerät (12) einen Prozessor (42) umfasst, der bei erkanntem Loslassen des Fahrpedals die wenigstens eine, eine Fahrgeschwindigkeit des Fahrzeuges verzögernde Einrichtung (16) des Fahrzeuges derart ansteuert, dass eine maximale Fahrgeschwindigkeit, die der gemessenen Fahrgeschwindigkeit entspricht oder in einem vorgebbaren Betrag übersteigt, nicht überschritten wird.

7. Fahrerassistenzsystem nach Anspruch 6, **dadurch gekennzeichnet, dass** das Steuergerät (12) über eine Signalleitung (38) mit einem Neigungssensor (40) verbunden ist, der eine Fahrzeugneigung um eine Fahrzeugquerachse in Fahrtrichtung detektiert.

8. Fahrerassistenzsystem nach einem der vorhergehenden Ansprüche, **dadurch gekennzeichnet, dass** das Fahrerassistenzsystem (10) durch ein Schaltelement (44) zuschaltbar beziehungsweise abschaltbar ist.
